# EUROPEAN PATENT SPECIFICATION

(11) **EP 4 300 845 B1**
(45) Date of publication and mention of the grant of the patent: **12.11.2025**
(21) Application number: 22386042.0
(22) Date of filing: 29.06.2022
(51) Int. Cl.: H04B 7/185

(54) **METHOD FOR TRANSMITTING A SERVICE TIME INFORMATION TO A USER EQUIPMENT IN A MOBILE COMMUNICATION NETWORK BEING OR HAVING A NON-TERRESTRIAL NETWORK, BASE STATION ENTITY, SYSTEM AND COMPUTER-READABLE MEDIUM**
VERFAHREN ZUR ÜBERTRAGUNG VON DIENSTZEITINFORMATIONEN AN EIN BENUTZERGERÄT IN EINEM MOBILKOMMUNIKATIONSNETZ ODER MIT EINEM NICHT TERRESTRISCHEN NETZWERK, BASISSTATION, SYSTEM UND COMPUTERLESBARES MEDIUM
PROCÉDÉ DE TRANSMISSION D'INFORMATIONS DE TEMPS DE SERVICE À UN ÉQUIPEMENT UTILISATEUR DANS UN RÉSEAU DE COMMUNICATION MOBILE ÉTANT OU AYANT UN RÉSEAU NON TERRESTRE, STATION DE BASE, SYSTÈME ET SUPPORT LISIBLE PAR ORDINATEUR

(43) Date of publication of application: 03.01.2024
(73) Proprietor: Deutsche Telekom AG, 53113 Bonn (DE); HELLENIC TELECOMMUNICATIONS ORGANIZATION S.A., 15124 Athen, Marousi (GR)
(72) Inventor: KLATT, Axel, 50999 Köln (DE); NIKOLITSA, Eftychia, 15122 Maroussi (GR)
(74) Representative: Schwöbel, Thilo K.

(56) References cited:
- EP-A1- 3 905 546
- CN-B- 109 121 147
- US-A1- 2017 019 814
- US-A1- 2020 145 078
- INTERDIGITAL ET AL: "IoT-NTN cell change", vol. RAN WG2, no. Online; 20211101 - 20211112, 21 October 2021 (2021-10-21), XP052066996, Retrieved from the Internet <URL:https://ftp.3gpp.org/tsg_ran/WG2_RL2/TSGR2_116-e/Docs/R2-2110551.zip R2-2110551 IoT-NTN cell change.docx> [retrieved on 20211021]
- HUAWEI ET AL: "Discussion on cell reselection in NTN", vol. RAN WG2, no. Online; 20210125 - 20210205, 15 January 2021 (2021-01-15), XP051974042, Retrieved from the Internet <URL:https://ftp.3gpp.org/tsg_ran/WG2_RL2/TSGR2_113-e/Docs/R2-2101000.zip R2-2101000 Discussion on cell reselection in NTN.doc> [retrieved on 20210115]
- OPPO: "Discussion on the support of discontinuous coverage for IoT over NTN", vol. RAN WG2, no. electronic; 20210809 - 20210827, 6 August 2021 (2021-08-06), XP052033875, Retrieved from the Internet <URL:https://ftp.3gpp.org/tsg_ran/WG2_RL2/TSGR2_115-e/Docs/R2-2107081.zip R2-2107081 - Discussion on the support of discontinuous coverage for IoT over NTN.doc> [retrieved on 20210806]

## Description

### BACKGROUND

The present invention relates a method for transmitting a service time information to a user equipment in a mobile communication network being or having a non-terrestrial network, wherein the user equipment is served by a base station entity being part of that non-terrestrial network or that non-terrestrial network part, wherein the base station entity has or is provided with - in view of serving or providing radio coverage to the user equipment - at least an antenna entity or functionality being either a satellite-based antenna entity or functionality, or an antenna entity or functionality based on a high-altitude platform.

Additionally, the present invention relates to a base station entity for transmitting a service time interval or a service time information to a user equipment in a mobile communication network, the mobile communication network being or at least comprising a part corresponding to or being a non-terrestrial network, wherein the user equipment is served by the base station entity being part of that non-terrestrial network or that non-terrestrial network part, wherein the base station entity has or is provided with - in view of serving or providing radio coverage to the user equipment - the antenna entity or functionality and the antenna entity or functionality being either a satellite-based antenna entity or functionality, or an antenna entity or functionality based on a high-altitude platform.

Additionally, the present invention relates to a system comprising an inventive base station entity.

Furthermore, the present invention relates to a computer-readable medium for transmitting a service time interval or a service time information to a user equipment in a mobile communication network being or at least comprising a part corresponding to or being a non-terrestrial network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part of or a region within a country) in a repeating pattern of typically stationary (radio) cells (and associated base station entities) which typically belong to (or are used by or associated or assigned to) a mobile network operator (MNO).
Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space-based network infrastructure include, e.g., mobile satellite connectivity with low earth orbit (LEO) satellites, medium earth orbit (MEO) satellites and/or geostationary earth orbit (GEO) satellites and also so-called high-altitude platforms or high-altitude pseudo-satellites (HAPS). Examples thereof are known from the following documents: INTERDIGITAL ET AL: "loT-NTN cell change", 3GPP DRAFT, R2-2110551; HUAWEI ET AL: "Discussion on cell reselection in NTN", 3GPP DRAFT: R2-2101000; and OPPO: "Discussion on the support of discontinuous coverage for loT over NTN", 3GPP DRAFT R2-2107081; EP 3905546 A1; US 2017/019814 A1; CN 109121147 B; US 2020/145078 A1.
Such non-terrestrial networks are able to provide global cellular connectivity to handheld devices or user equipments, typically using satellite or HAP coverage with quasi earth fixed beams, i.e. radio coverage is attempted to be provided, for a certain considered (quasi) fixed geographical area (of the considered radio cell), in an almost statical or unchanged manner during a certain time interval or until a certain point in time.
This is in contrast to using earth-moving beams by means of which radio coverage is provided in a moving geographical area, or earth-moving radio cell, that is moving, relative to the earth surface, together with the movement of the satellite (or the high altitude platform device); such earth-moving radio cells typically being located around a geographical location, often corresponding to a projection of the current position of the satellite (or of the high altitude platform device), along a more or less vertical line, on to the earth surface.
However in practice, the use of such earth-moving radio cells is challenging as this implies a complete redesign of classical mobility and coverage approaches from terrestrial networks (TNs) known since decades.

### SUMMARY

An object of the present invention is to provide a technically simple, effective and cost-effective solution for transmitting a service time interval or a service time information to a user equipment (and especially a plurality of user equipments) being served by a non-terrestrial network base station entity providing radio coverage to a moving (geographical) area corresponding to an earth-moving radio cell. A further object of the present invention is to provide a system and a corresponding computer-readable medium.

The object of the present invention is achieved by a method according to claim 1.

It is thereby advantageously possible according to the present invention to provide the service time interval (especially by means of transmitting the service time information) to the user equipment (i.e. to all user equipments) located within the earth-moving radio cell (or radio coverage area) in a manner such that this service time interval is uniformly applicable (or generally relevant for all these user equipments) within essentially the whole earth-moving radio cell (and, especially and in addition to that, the reception of the service time interval or the service time information is also essentially limited to such user equipments, i.e. essentially, there are no user equipments that are receiving the respective control information carrying (or comprising) the service time interval or the service time information and for which that information is not intended or relevant). In other words: The service time information corresponds to a general service time information, i.e. applicable to all or almost all user equipments located within the coverage area of the radio cell. Hence, according to the present invention it is advantageously possible to provide radio coverage in a more efficient manner.
It is thereby advantageously possible that a user equipment that is receiving the service time information (indicating the service time interval) is served, by the base station entity (i.e. its antenna entity or functionality), during the service time interval indicated by the service time information, especially without the necessity, for such a user equipment, to determine its position or location (especially its lateral distance with respect to the reference location information and/or with respect to the location indicated by pieces of reference location information along the direction of movement of the antenna entity or functionality). Especially, it is thereby advantageously possible to reduce capability requirements (of the user equipments, e.g. regarding the determination of the location or position) and/or computation efforts and energy consumption and/or time delay (for conducting such computations) of the user equipment: Within the earth-moving radio cell or radio coverage area, the user equipment only needs to receive the service time information indicating the service time interval, and the user equipment is assured to be served, by the base station entity or its antenna entity or functionality, during the service time interval.
The service time typically corresponds to or indicates the duration or period during which a user equipment is able to be provided radio coverage by the antenna entity or functionality (of the base station entity), and according to the present invention this service time (interval) is essentially uniform or equal within the radio cell i.e. the geographic area served by the antenna entity or functionality.

The present invention is focused on low earth orbit (LEO) satellites or high altitude platform entities which typically are located up to 300 km until 1500 km above ground (especially 800 km to 1000 km), and are, typically, traveling at a velocity of around 7 km/s, resulting in a round trip time about the globe of typically about 100 minutes.

According to the present invention, the radio cell or coverage area is an earth-moving radio cell or coverage area, typically moving or travelling on the earth surface in unison with the movement of the satellite or high altitude platform device. This means that a considered satellite or high altitude platform device is able to provide coverage and/or service (or communication services) only during a defined period of time or time interval to a user equipment that is assumed being stationary or almost stationary on or above the earth surface (at least compared to the ground speed of the antenna entity or functionality). This defined period of time or time interval of coverage or service, of course, depends on the size and/or geometry of the earth-moving radio cell or coverage area, and on the velocity and/or direction of movement and/or trajectory of the satellite or high altitude platform device above ground; however, according to the present invention, especially the geometry of the earth-moving radio cell or coverage area (especially with respect to the direction of movement) is chosen such that the service period of time or the time interval of service (or of coverage) does not depend on the relative position of a considered user equipment within or relative to the earth-moving radio cell or coverage area, i.e. the service time information transmitted by the antenna entity or functionality corresponds to a general service time information, i.e. a duration of the service time interval that is (meaningfully) applicable to all user equipments within the radio cell. Depending on the geometry or shape of the radio cell, this might encompass situations where the indicated service time duration corresponds to a minimum service time duration being applicable to all such user equipments within the radio cell, i.e. - again depending on the geometry or shape of the radio cell - there might be user equipments (typically being located in a rather central part of the radio cell) where a larger duration of the service time interval (than the one indicated by the service time information) is possible.

According to the present invention, the user equipment is connected to (or is in) a mobile communication network that is a non-terrestrial network; alternatively, the mobile communication network at least comprises a part that corresponds to or is a non-terrestrial network. The user equipment is (or, rather, the plurality of user equipments are) served by the base station entity as in a conventionally known mobile communication network; however, the serving base station entity is assumed as being part of the non-terrestrial network (or, at least, the non-terrestrial network part) of the mobile communication network. According to the present invention, the base station entity is provided with at least one antenna entity or functionality (but preferably, the base station entity is provided with more than one antenna entities or functionalities), the at least one antenna entity or functionality (of the base station entity) is either a satellite-based antenna entity or functionality (i.e. located onboard a satellite), or an antenna entity or functionality based on a high-altitude platform device (i.e. located onboard such a high altitude platform device). The base station entity serves (i.e. providing communication services to) the user equipment (or plurality thereof) by means of or using the at least one antenna entity or functionality - typically using a service (radio) link towards and/or from the user equipment in order to realize downlink and/or uplink data transmissions.
According to the present invention, the whole (or mayor parts of the) functionality of the base station entity might be located onboard the satellite or onboard the high-altitude platform device (hence, in this case, typically requiring some kind of backhaul connectivity to an earth or ground station and/or to another satellite or high-altitude platform device). Alternatively, the mayor parts of the functionality of the base station entity might be located either at or in an earth or ground station, or at or in another satellite or high altitude platform device (in this case, typically requiring some kind of feeder link or feeder connectivity to an earth or ground station and/or to another satellite or high altitude platform device).
The antenna entity or functionality (either as part of the satellite or as part of the high altitude platform device) thus moves relative to the earth surface along a direction of movement (and/or following a certain, typically predefined, trajectory), and is thereby able to provide radio coverage to the earth-moving radio cell. In case of a satellite-based antenna entity or functionality, the trajectory of the movement of the satellite (at least from a fixe or quasi stationary ground perspective) can typically very well be approximated by an almost straight line as the curvatures of such satellite trajectories is almost negligible from such a perspective. However, in case of a high-altitude platform device, the trajectory of such a device might be less straight, i.e. having a non-negligible curvature.

The reference location information relates to a specific part of the currently covered area of the radio cell, typically the center of the currently covered area (or radio cell). The service time information relates to until when (i.e. at which (future) point in time) the base station entity (via its satellite-based antenna entity or functionality) likely stops being able to serve the currently covered area.
It is assumed according to the present invention that the reference location information and the service time information is transmitted repeatedly, especially in regular time intervals of, e.g., 320 ms or 640 ms or 1280 ms or of another duration, and that the transmitted values of the reference location information and the service time information are updated in order to correspond to the correct (or current) values either at the transmission point in time, or at a point in time corresponding to a predetermined (comparatively small) offset time relative to the transmission point in time; hence, the successive indications (by the base station entity, and towards the user equipment) of the (repeatedly updated) reference location information provide (or correspond to) a sequence of points or locations (typically on the earth surface) that, collectively, at least roughly define a travel path of the earth-moving radio cell (or, at least, from which such a travel path could be derived), especially a central trajectory path of the earth-moving radio cell.

For the sake of simplicity, in the context of the present invention, it is assumed that one radio cell or coverage area is provided by one satellite or high altitude platform device.

According to the present invention, the antenna entity or functionality provides a coverage area such that a rectangular earth-moving radio cell or coverage area is generated, wherein two of the sides of the rectangularly shaped earth-moving radio cell or coverage area are essentially parallel to the direction of movement of the earth-moving radio cell or essentially parallel to the central trajectory path of the moving earth-moving radio cell.

By means of configuring and/or controlling the antenna entity or functionality such that a rectangular coverage area is realized on or near the ground, i.e. the earth's surface, it is advantageously possible according to the present invention that the duration of the service time interval is not only independent on where a user equipment is located or positioned laterally (with respect to the direction of movement of the antenna entity or functionality), i.e. in a direction essentially orthogonal to this direction of movement; in addition, it is also verified that the duration of the service time interval indicated by the service time information almost exactly corresponds to the actual service time duration. As the coverage area of satellite-based antenna base station entities is rather well defined (i.e. the absolute value of the signal strength gradient of the antenna radio signal is rather low within the radio cell - compared to a terrestrial radio cell, and rather high outside of the radio cell), it is advantageously possible according to the present invention that (with the exception of marginal effects) in case that a user equipment (is positioned, with respect to the antenna entity or functionality, such that it) is able to receive the control signal (e.g. the signal of a broadcast control channel) carrying the service time information, the indicated service time interval is also (almost exactly) relevant (or applicable) for such a user equipment, i.e. such a user equipment will be able to be served, by the antenna entity or functionality during the whole time interval indicated by the service time information and only during (exactly) that time interval (again with the exception, at the border or the margin of the radio cell, that such a user equipment is moving rather quickly in lateral direction away from the central part of the radio cell).
In other words, by means of configuring and/or controlling the antenna entity or functionality such that a rectangular coverage area is realized, all user equipments for which the service time information is exactly relevant (or applicable) are able to be reached by the control signal carrying the service time information, and also only such user equipments are reached by that control signal, i.e. the service time information transmitted by the antenna entity or functionality not only corresponds to a general service time information, (meaningfully) applicable to all user equipments within the radio cell but this general service time information also corresponds to essentially exactly the possible service time (duration). However, the realization of the coverage area - according to the present invention - such that the antenna entity or functionality provides a rectangular earth-moving radio cell or coverage area just corresponds to the sweet spot where the above mentioned condition (all user equipments for which the service time information is exactly relevant (or exactly applicable) are able to be reached by the control signal carrying the service time information, and also only such user equipments are reached by that control signal) is met almost ideally. As mentioned above, according to other embodiments of the present invention and especially depending on the geometry or shape of the radio cell, the service time duration (indicated by the service time information) corresponds just to a minimum service time duration that is applicable generally within the radio cell, i.e. to all such user equipments.
According to variants of the present invention, a rectangular radio coverage area of the radio cell is able to be realized by means of conforming, as much as possible, the shape of the coverage area obtained by a specifically considered configuration or mode of operation of the antenna entity or functionality to the desired rectangular shape; one possibility to measure whether the shape of the coverage area conforms to (or matches) the desired rectangular shape could, e.g., be to attempt to reduce, especially as much as technically meaningfully possible, either one or both of
-- the (absolute or relative) surface area of the radio cell not covering the desired rectangular shape,
-- the (absolute or relative) surface area of the radio cell extending the desired rectangular shape; another possibility of such a measure could be to mandate a maximum (absolute or relative) distance between the radio cell and the desired rectangular shape, e.g. along a direction orthogonal to an edge of the desired rectangular shape, or along a direction from the center (or weighted center; 'center of gravity') of the coverage area or of the desired rectangular shape. In this respect, the effective extension of the radio cell considered could, e.g., be defined by considering those locations where a signal strength (of radio signals received, by the user equipment, from the antenna entity or functionality) exceeds a certain predefined (absolute or relative) threshold value.

According to the present invention, one of the following is realized:
-- the antenna entity or functionality generates at least one moving beam, or spot beam, wherein the moving beam is oriented in different spatial directions at different points in time such that the coverage area is swept through during a predetermined time interval and such that the resulting coverage area approximately is or corresponds to a rectangularly shaped coverage area of the radio cell, or
-- the antenna entity or functionality generates a multitude of differently shaped static or quasi-static spot beams such that the resulting coverage area approximately is or corresponds to a rectangularly shaped coverage area of the radio cell.

It is thereby advantageously possible according to the present invention that the coverage area of the radio cell is able to be configured according to various possibilities and using a plurality of different technical solutions.

According to the present invention, it is furthermore advantageously possible and preferred that the reference location information defines the central part of the earth-moving radio cell, especially the central trajectory path of the moving earth-moving radio cell, wherein especially the reference location information also indicates a lateral extension of the earth-moving radio cell from the central part of the earth-moving radio cell, especially the central trajectory path of the moving earth-moving radio cell.

According to the present invention, it is furthermore advantageously possible and preferred that the reference location information defines the two lateral border parts of the earth-moving radio cell in a direction essentially parallel to the direction of movement of the antenna entity or functionality
and/or
wherein the reference location information comprises at least one reference point information, at least one height information and/or at least one width information, preferably a first height information, a second height information, a first width information and a second width information, wherein the height information preferably corresponds to the extension of the coverage area, from the reference point, in a direction essentially parallel to the direction of movement of the antenna entity or functionality, and wherein the width information preferably corresponds to the extension of the coverage area, from the reference point, in a direction essentially orthogonal to the direction of movement of the antenna entity or functionality.

Furthermore, it is advantageously possible and preferred according to the present invention that the base station entity transmits, and the user equipment receives, the reference location information and the service time information as information elements as part of a system information block, especially broadcast by the base station entity, especially system information block 19 with 3GPP NR technology.

It is thereby advantageously possible according to the present invention that the reference location information as well as the service time information is able to be transmitted, by the base station entity or by the antenna entity or functionality, to the user equipment in an efficient manner. Especially according to the present invention, the reference location information is indicated in remaining UTC seconds in 10 ms units since 00:00:00 on Gregorian calendar date 1 January, 1900 (midnight between Sunday, December 31, 1899 and Monday, January 1, 1900).

Furthermore, the present invention relates to a base station entity according to claim 5.

Furthermore, the present invention relates to a system according to claim 6.

Still additionally, the present invention relates to a computer-readable medium according to claim 7.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates the situation of a user equipment in a mobile communication network being a non-terrestrial network or at least comprising a part corresponding to a non-terrestrial network, the user equipment being served by a base station entity having at least an antenna entity or functionality being a satellite-based antenna entity or functionality.
Figure 2 schematically illustrates the situation of the user equipment being served by a base station entity having a satellite-based antenna entity or functionality moving relative to the earth surface along a direction of movement, thereby providing radio coverage to a moving area corresponding to an earth-moving radio cell.
Figures 3 and 4 schematically illustrate the user equipment being served by a base station entity with an antenna entity or functionality providing a rectangular radio coverage area.
Figures 5 and 6 schematically illustrate different exemplary embodiment to realize a rectangular radio coverage area.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

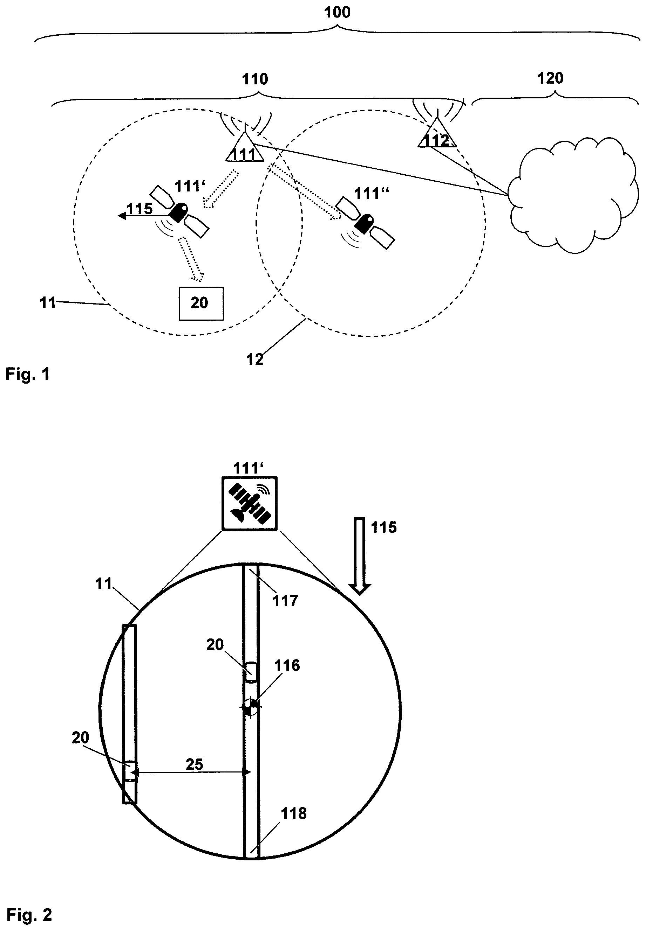

In Figure 1, a user equipment 20 is schematically shown in a mobile communication network 100. In the example, the mobile communication network 100 comprises an access network 110 and a core network 120. The mobile communication network 100 is preferably a cellular telecommunications network comprising typically a plurality of network cells (or radio cells). According to the present invention, the mobile communication network 100 comprises or uses or is associated or assigned to a radio access network 110, and the radio access network 110 (of the mobile communication network 100) comprises at least one base station entity, but typically a plurality of base station entities. Figure 1 schematically and exemplarily shows a first base station entity 111 and a second base station entity 112.

The mobile communication network 100 (or telecommunications network 100) is or at least comprises a part corresponding to or being a non-terrestrial network. The user equipment 20 is served by the (first) base station entity 111 being part of that non-terrestrial network or that non-terrestrial network part.
The base station entity 111 has or is provided with - in view of serving or providing radio coverage to the user equipment 20 - at least one antenna entity or functionality 111' being either a satellite-based antenna entity or functionality, or an antenna entity or functionality based on a high-altitude platform; Figure 1 primarily shows the alternative of a satellite-based antenna entity or functionality 111'. The antenna entity or functionality 111' - being part of the non-terrestrial network (part) of the mobile communication network 100 - is moving relative to the earth surface along a direction of movement which is schematically indicated by reference sign 115 in Figure 1. The base station entity 111, via or by means of the antenna entity or functionality 111', is thereby able to provide radio coverage to a moving area (on the earth's surface), corresponding to an earth-moving radio cell 11. The second or further base station entity 112 is also schematically shown in Figure 1 as well as a further antenna entity or functionality 111" providing or serving a further radio cell 12.

The base station entity 111 (via the antenna entity or functionality 111') transmits, and the user equipment 20 receives, a reference location information and a service time information. The reference location information relates to a specific part of the currently covered area, and the service time information relates to until when the base station entity 111 likely stops serving the currently covered area (based on the fact that the radio cell 11 (due to the movement of the satellite-based antenna entity or functionality 111') is moving, and, hence, at a point in time is at a location from where no single point of the currently served radio cell 11 could be served (i.e. the satellite in this case left completely the current radio cell 11, or it is not visible any more from any point of the current radio cell 11).

According to the present invention, the base station entity 111 is provided with at least one antenna entity or functionality 111' (but preferably, the base station entity 111 is provided with more than one antenna entities or functionalities 111', 111"), the at least one antenna entity or functionality 111' (of the base station entity 111) is either a satellite-based antenna entity or functionality (i.e. located onboard a satellite as shown in Figure 1), or an antenna entity or functionality based on a high-altitude platform device (i.e. located onboard such a high altitude platform device, not explicitly shown in Figure 1). The base station entity 111 serves (i.e. providing communication services to) the user equipment 20 by means of or using the at least one antenna entity or functionality 111' (or, by means of using the first antenna entity or functionality 111' during one time interval, and by means of using the second antenna entity or functionality 111" during a subsequent further time interval). In any case, typically, a service (radio) link towards and/or from the user equipment 20 is used in order to realize downlink and/or uplink data transmissions; this is schematically indicated, in Figure 1, by means of a dotted arrow, directed from the antenna entity or functionality 111' towards the user equipment 20.
Figure 1 schematically and exemplarily shows a configuration where the mayor parts of the functionality of the base station entity 111 is located separated from the antenna entity or functionality 111', especially at or in an earth or ground station 111; alternatively, the mayor parts of the functionality of the base station entity 111 could also be located at or in another satellite or high-altitude platform device. In such a scenario where the mayor parts of the functionality of the base station entity 111 is located separated from the antenna entity or functionality 111' (and from the further antenna entity or functionality 111"), the antenna entity or functionality 111' (and the further antenna entity or functionality 111"), typically requires some kind of feeder link or feeder connectivity (i.e. to the earth or ground station and/or to another satellite or high altitude platform device) ; this is schematically indicated, in Figure 1, by means of dotted arrows, directed from the base station entity 111 towards the antenna entities or functionalities 111', 111", respectively.
Alternatively to the configuration shown in Figure 1, it is also possible and preferred according to the present invention that the whole (or mayor parts of the) functionality of the base station entity 111 might be located onboard the satellite or onboard the high altitude platform device. In this case, a backhaul connectivity is typically provided, from the combined satellite-based base station entity 111 comprising the antenna entity or functionality 111', to an earth or ground station and/or to another satellite or high-altitude platform device.

In Figure 2, the situation of the user equipment 20 being served by the base station entity 111 having the satellite-based antenna entity or functionality 111' moving relative to the earth surface along a direction of movement 115 is schematically shown for two different locations of the specific user equipment 20. At a considered point in time, the base station entity 111, via the antenna entity or functionality 111', provides radio coverage to the radio cell 11 as schematically shown in Figure 2, wherein this moving radio cell typically moves together with the antenna entity or functionality 111', i.e. corresponds to an earth-moving radio cell 11. In the direction of movement 115 of the antenna entity or functionality 111', the earth-moving radio cell 11 comprises a central part 116 typically comprising the location of the reference location information 116, e.g., in the center of the radio cell 11. The exemplarily shown user equipment 20 in its first location, being located at or on the central part 116 of the radio cell 11, would be able to be served by the base station entity 111 and via the antenna entity or functionality 111' during the whole time interval required for the antenna entity or functionality 111' to sweep over the radio cell 11 - i.e. from the point in time the radio coverage, by means of the antenna entity or functionality 111', is first provided to a region (on the central part of the radio cell 11) indicated by means of reference sign 117 until the point in time the radio coverage, by means of the antenna entity or functionality 111', is lost from the point of view of a region (on the central part of the radio cell 11) indicated by means of reference sign 118. In contrast thereto (i.e. to the user equipment 20 being located in its first considered location at or on the central part of the radio cell 11), in case the user equipment 20 is located rather distanced from the central part 116 of the radio cell 11 (to the left hand side in Figure 2) the time interval it experiences or sees radio coverage (provided by that same antenna entity or functionality 111') is much shorter.
Roughly, the durations of the corresponding service time intervals of these two exemplarily considered locations of the user equipment 20 are able to be schematically represented by the lengths of the two rectangles (parallel to the direction of movement 115) shown in Figure 2. Due to the distance (indicated by means of reference sign 25 in Figure 2) of the second location of the user equipment 20 with respect to the central part 116 of the radio cell 11 (corresponding to the first location of the user equipment 20), and due to a roughly circular (or elliptical) shape of the radio cell 11, the service time interval is much shorter in case that the specific user equipment 20 is located at the second location.

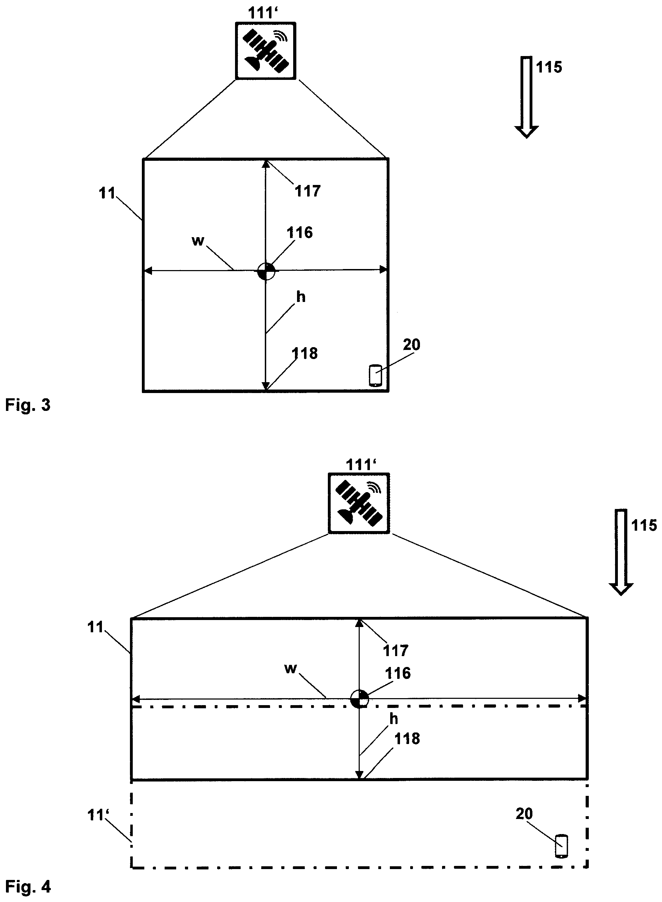

In Figures 3 and 4 the user equipment 20 is served by the base station entity, and the base station entity has or is associated with the antenna entity or functionality 111'. Again, the radio cell 11 has or comprises (both in the exemplary embodiment of Figure 3 as well as in the embodiment of Figure 4), in the direction of movement 115 of the antenna entity or functionality 111', a central part 116 typically comprising the location of the reference location information 116, e.g., in a central part or in the center of the radio cell 11. In the exemplarily shown embodiment of Figures 3 and 4, the antenna entity or functionality 111' provides a rectangular radio coverage area 11 or radio cell 11, especially having - at least roughly - an extension of (e.g. a certain number of kilometers) h parallel or substantially parallel to its direction of movement 115, and an extension of (e.g. a certain number of kilometers) w orthogonal or substantially orthogonal to its direction of movement 115.
Both the representation of Figure 3 and of Figure 4 is able to be understood as showing an earth-moving radio cell 11. Considering the movement 115 of the antenna entity or functionality 111', the base station entity 111 (or antenna entity or functionality 111') serves (or provides communication services to user equipments 20 located in) the coverage area 11 at a first point in time, and the radio coverage moves to a different coverage area (in Figure 4 indicated by means of reference sign 11') at a later (or second) point in time.
The exemplarily shown user equipment 20 is able to be served, by the base station entity 111 and via the antenna entity or functionality 111', during a certain period of time; the time interval required for the antenna entity or functionality 111' to sweep over (the height extension of the radio coverage area of) the radio cell 11 - i.e. from the point in time the radio coverage, by means of the antenna entity or functionality 111', is first provided to a region indicated by means of reference sign 117 until the point in time the radio coverage, by means of the antenna entity or functionality 111', is lost from the point of view of a region indicated by means of reference sign 118. By means of providing a rather rectangular extension of the radio coverage area 11, the service time interval is independent from the user equipment's lateral distance from the central part of the radio cell 11; furthermore, the duration of the service time interval is equal for each user equipment 20 within the radio cell 11.

According to the present invention, the base station entity 111 (via the antenna entity or functionality 111') transmits, and the user equipment 20 receives, the reference location information 116 and the service time information (being both generally applicable to user equipments 20 located within the respective coverage area 11, i.e. irrespective of their lateral distance from the central part of the coverage area. The reference location information 116 relates to a specific part of the radio cell 11, and the service time information, or also called general service time information, relates to until when the base station entity 111 likely stops serving the radio cell 11 (especially due to the movement of the satellite-based antenna entity or functionality 111' being moving).

By means of providing a rectangular earth-moving radio cell 11, it is advantageously possible that the service time information not only indicates a generally applicable service time interval (irrespective of the lateral position of a user equipment 20) as a minimum service time interval but it is possible that the service time is equal for all user equipments 20 within the radio cell 11. According to such an embodiment, two of the sides of the rectangularly shaped earth-moving radio cell 11 or coverage area are essentially parallel to the direction of movement 115 of the earth-moving radio cell 11 or essentially parallel to the central trajectory path of the moving earth-moving radio cell 11.

The radio coverage area generated by the antenna entity or functionality 111' is realized by means of one of the following:
-- beam sweeping (i.e. the antenna entity or functionality 111' generates at least one moving beam, or spot beam, wherein the moving beam is oriented in different spatial directions at different points in time such that the coverage area is swept through during a predetermined time interval and such that the resulting coverage area approximately is or corresponds to a rectangularly shaped coverage area of the radio cell 11),
-- spot beams (i.e. the antenna entity or functionality 111' generates a multitude of differently shaped static or quasi-static spot beams such that the resulting coverage area approximately is or corresponds to a rectangularly shaped coverage area of the radio cell 11).

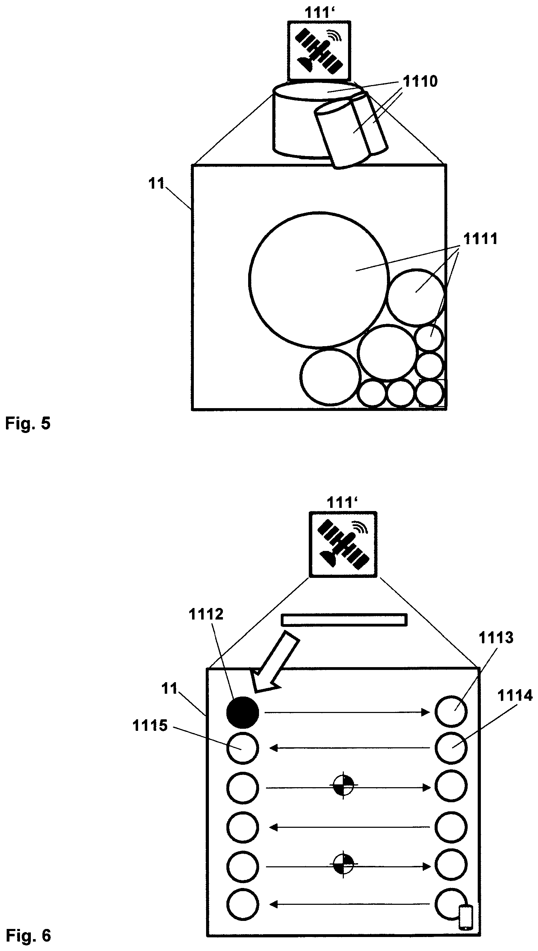

The possibility to realize rectangular coverage areas, according to the present invention, is schematically shown in Figure 5: As part of the antenna entity or functionality 111', a plurality of antenna panels 1110 or antenna elements 1110 are used, wherein each one of such antenna panels 1110 covers a specific sub area or portion 1111 of the radio coverage area 11 of the radio cell. It is thereby possible to realize a rectangular coverage area 11.

The possibility to realize rectangular coverage areas, according to the present invention, is schematically shown in Figure 6. According to this embodiment, at least one antenna beam is swiped through the coverage area 11: E.g. the area of the radio cell 11 is able to be covered by means of comparatively quickly scanning or sweeping through a plurality of different locations such as to, e.g., provide coverage to a first location 1112 at a first point in time, to a second location 1113 at a second point in time, to a third location 1114 at a third point in time, to a fourth location 1115 at a fourth point in time, and so forth in order to cover and thereby providing radio coverage to the radio cell 11. Of course, it is advantageously possible to use more than one antenna beam, or even one antenna beam per coverage line (e.g. between the first and second locations 1112, 1113, or between the third and fourth locations 1114, 1115). Especially this scanning or sweeping of an antenna beam might be realized by means of a continuous movement or by means of discontinuously targeting different discrete positions (at specific respective points in time).

Additionally, according to the present invention that the reference location information 116 as well as the (general) service time information is transmitted, by the base station entity 111 (or by the antenna entity or functionality 111') to the user equipment 20.
Especially the base station entity 111 transmits, and the user equipment 20 receives, the reference location information and the service time information as information elements as part of a system information block, especially broadcast by the base station entity, especially system information block 19 with 3GPP NR technology 111.
In case of a rectangularly shaped coverage area of the radio cell 11, the reference location information especially comprises at least one reference point information, at least one height information (h) and/or at least one width information (w), preferably a first height information, a second height information, a first width information and a second width information, wherein the height information preferably corresponds to the extension of the coverage area, from the reference point, in a direction essentially parallel to the direction of movement 115 of the antenna entity or functionality 111', and wherein the width information preferably corresponds to the extension of the coverage area, from the reference point, in a direction essentially orthogonal to the direction of movement 115 of the antenna entity or functionality 111'.
Hence, for the signaling of the satellite-created (or high-altitude platform-created) rectangular coverage area, related radio resource control, RRC, signaling the respective radio technology is preferably utilized, in case of 3GPP new radio, NR, especially the system information broadcast, e.g. system information block, SIB 19, by means of which the related information is added using RRC signaling.
E.g. for a rectangular shape of the coverage area 11, the coverage area height and width is transmitted using RRC signalling:
-- regarding the height of the coverage area 11: h1 : RP : h2 (so distance ½ H (h1) in direction of moving satellite coverage + ½ H (h2) in opposite direction);
-- regarding the width of the coverage area 11: w1 : RP : w2 (so distance ½ W (w1) left in direction of moving satellite coverage + ½ W (w2) right of central line);
with such signalling (h1=h2 & w1=w2), the reference point 116 is located in the center (center of gravity) of the coverage area rectangle; alternatively with (h1<>h2 & w1<>w2) the reference point 116 is located flexibly inside the rectangle; with (h1=h2=w1=w2) the reference point 116 corresponds to the center of a quadratic coverage area 11, and with (h1+h2=w1+w2), the reference point is located flexibly inside of a quadratic coverage. Hence, the following ASN.1 additions to SIB19 (for a rectangular coverage shape) are proposed:

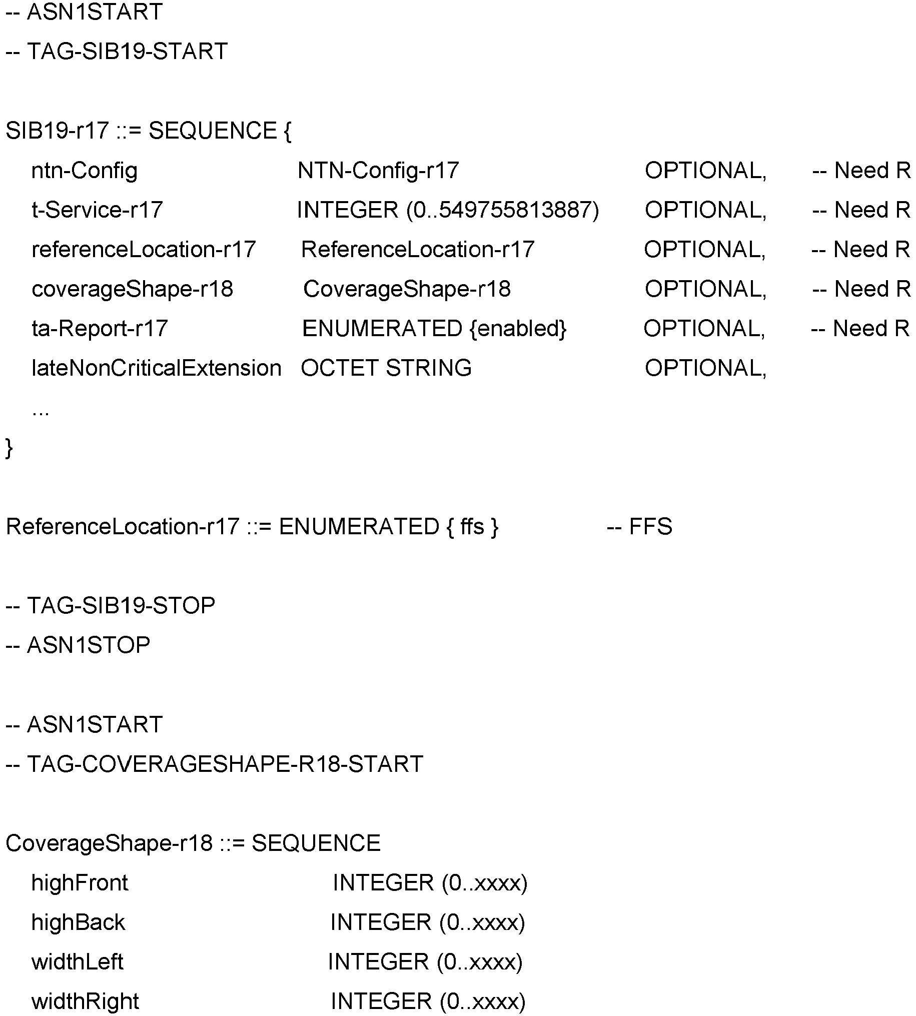

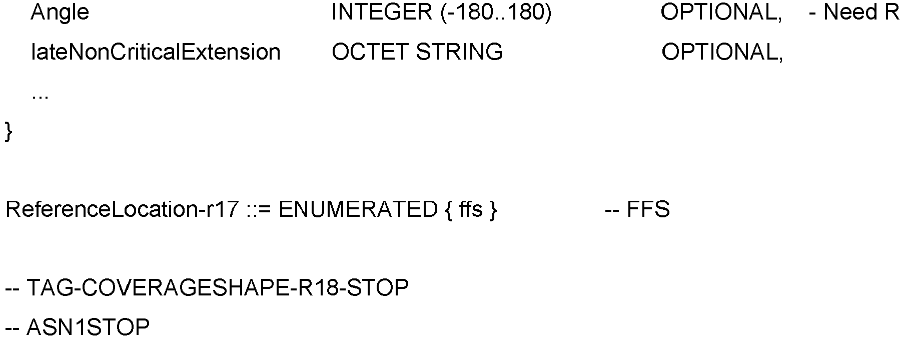

## Claims

1. Method for transmitting a service time information to a user equipment (20) in a mobile communication network (100), the mobile communication network (100) being or at least comprising a non-terrestrial network, wherein the user equipment (20) is served by a base station entity (111) being part of that non-terrestrial network, wherein the base station entity (111) has an antenna entity or functionality (111') being either a satellite-based antenna entity or functionality, or an antenna entity or functionality based on a high-altitude platform, the antenna entity or functionality (111') moving relative to the Earth surface along a direction of movement (115), thereby providing radio coverage to a moving area corresponding to an earth-moving radio cell (11), wherein the method comprises:
-- providing, by the antenna entity or functionality (111'), a coverage area such that a rectangularly shaped earth-moving coverage area is generated, wherein two sides of the rectangularly shaped earth-moving coverage area are essentially parallel to a direction of movement (115) of the earth-moving radio cell (11) or essentially parallel to a central trajectory path of the earth-moving radio cell (11) and wherein one of the following is realized:
-- generating, by the antenna entity or functionality (111'), at least one moving beam, wherein the moving beam is oriented in different spatial directions at different points in time such that the coverage area is swept through during a predetermined time interval and such that a resulting coverage area approximately corresponds to the rectangularly shaped earth-moving coverage area of the radio cell (11), or
-- generating, by the antenna entity or functionality (111'), a multitude of differently shaped static or quasi-static beams such that a resulting coverage area approximately corresponds to the rectangularly shaped earth-moving coverage area of the radio cell (11), and wherein the method further comprises:
-- transmitting, the base station entity (111) to the user equipment (20), a reference location information and the service time information, the reference location information relating to a specific part of a currently covered area, and the service time information relating to until when the base station entity (111) likely stops serving the currently covered area, wherein the service time information indicates a generally applicable service time interval and a service time is equal for all user equipments within the earth-moving radio cell.

2. Method according to claim 1, wherein the reference location information defines a central part (116) of the earth-moving radio cell (11), especially a central trajectory path of the earth-moving radio cell (11),
wherein especially the reference location information also indicates a lateral extension of the earth-moving radio cell (11) from the central part (116) of the earth-moving radio cell (11), especially the central trajectory path of the earth-moving radio cell (11).

3. Method according to claim 1, wherein the reference location information defines two lateral border parts of the earth-moving radio cell (11) in a direction essentially parallel to the direction of movement (115) of the antenna entity or functionality (111')
and/or
wherein the reference location information comprises at least one reference point information, at least one height information and/or at least one width information, preferably a first height information, a second height information, a first width information and a second width information, wherein the at least one height information preferably corresponds to an extension of the coverage area, from the at least one reference point, in a direction essentially parallel to the direction of movement (115) of the antenna entity or functionality (111'), and wherein the width information preferably corresponds to the extension of the coverage area, from the at least one reference point, in a direction essentially orthogonal to the direction of movement (115) of the antenna entity or functionality (111').

4. Method according to one of the preceding claims, wherein transmitting, by the base station entity (111) to the user equipment (20) the reference location information and the service time information comprises transmitting, by the base station entity (111) to the user equipment (20), the reference location information and the service time information as information elements as part of a system information block, especially broadcast by the base station entity (111), especially system information block 19 with 3GPP NR technology.

5. Base station entity (111) for transmitting a service time information to a user equipment (20) in a mobile communication network (100), the mobile communication network (100) being or at least comprising a non-terrestrial network, wherein the base station (111) is configured to be part of that non-terrestrial network and to serve the user equipment (20), wherein the base station entity (111) has an antenna entity or functionality (111') being either a satellite-based antenna entity or functionality, or an antenna entity or functionality based on a high-altitude platform, the antenna entity or functionality (111') being configured to move relative to the Earth surface along a direction of movement (115), thereby providing radio coverage to a moving area corresponding to an earth-moving radio cell (11), wherein the antenna entity or functionality (111') is configured to provide a coverage area such that a rectangularly shaped earth-moving coverage area is generated, wherein two sides of the rectangularly shaped earth-moving coverage area are essentially parallel to a direction of movement (115) of the earth-moving coverage area or essentially parallel to a central trajectory path of the earth-moving radio cell (11), and wherein one of the following is realized:
-- the antenna entity or functionality (111') is configured to generate at least one moving beam, wherein the moving beam is oriented in different spatial directions at different points in time such that the coverage area is swept through during a predetermined time interval and such that the resulting coverage area approximately corresponds to the rectangularly shaped earth-moving coverage area of the radio cell (11), or
-- the antenna entity or functionality (111') is configured to generate a multitude of differently shaped static or quasi-static beams such that a resulting coverage area approximately corresponds to the rectangularly shaped earth-moving coverage area of the radio cell (11), and
wherein the base station entity (111) is further configured to transmit a reference location information and the service time information to the user equipment (20), the reference location information relating to a specific part of a currently covered area, and the service time information relating to until when the base station entity (111) likely stops serving the currently covered area, wherein the service time information indicates a generally applicable service time interval and a service time is equal for all user equipments within the earth-moving radio cell.

6. System comprising a base station entity (111) according to claim 5 .

7. Computer-readable medium comprising instructions which when executed on a computer, causes the computer to perform a method according one of claims 1 to 4.

## Patentansprüche

1. Verfahren zum Übertragen einer Dienstzeit-Information an ein Endgerät (20) in einem Mobilkommunikationsnetz (100), wobei das Mobilkommunikationsnetz (100) ein nicht-terrestrisches Netz ist oder zumindest umfasst, wobei das Endgerät (20) von einer Basisstations-Entität (111) bedient wird, die Teil dieses nicht-terrestrischen Netzes ist, wobei die Basisstations-Entität (111) eine Antennen-Entität oder Antennenfunktionalität (111') aufweist, die entweder eine satellitenbasierte Antennen-Entität oder -Funktionalität ist, oder eine Antennen-Entität oder -Funktionalität, die auf einer Hochaltitude-Plattform basiert, wobei sich die Antennen-Entität oder Antennenfunktionalität (111') relativ zur Erdoberfläche entlang einer Bewegungsrichtung (115) bewegt und dadurch Funkabdeckung für einen sich bewegenden Bereich bereitstellt, der einer erdbewegten Funkzelle (11) entspricht, wobei das Verfahren umfasst:
-- Bereitstellen eines Abdeckungsbereichs durch die Antennen-Entität oder Antennenfunktionalität (111'), sodass ein rechteckig geformter Abdeckungsbereich erzeugt wird, wobei zwei Seiten des rechteckig geformten Abdeckungsbereichs im Wesentlichen parallel zur Bewegungsrichtung (115) der erdbewegten Funkzelle (11) oder im Wesentlichen parallel zu einer zentralen Trajektorienbahn der erdbewegten Funkzelle (11) sind und wobei eines der Folgenden realisiert wird:
-- Erzeugen von mindestens einem beweglichen Strahl durch die Antennen-Entität oder Antennenfunktionalität (111'), wobei der bewegliche Strahl zu verschiedenen Zeitpunkten in verschiedene räumliche Richtungen orientiert wird, sodass der Abdeckungsbereich während eines vorbestimmten Zeitintervalls durchstrichen wird und sodass ein resultierender Abdeckungsbereich ungefähr dem rechteckig geformten erdbewegten Abdeckungsbereich der Funkzelle (11) entspricht, oder
-- Erzeugen einer Vielzahl von unterschiedlich geformten statischen oder quasi-statischen Strahlen durch die Antennen-Entität oder Antennenfunktionalität (111'), sodass ein resultierender Abdeckungsbereich ungefähr dem rechteckig geformten erdbewegten Abdeckungsbereich der Funkzelle (11) entspricht, und wobei das Verfahren ferner umfasst:
-- Übertragen einer Referenzstandort-Information und der Dienstzeit-Information von der Basisstations-Entität (111) an das Endgerät (20), wobei sich die Referenzstandort-Information auf einen spezifischen Teil eines aktuell abgedeckten Bereichs bezieht und sich die Dienstzeit-Information darauf bezieht, bis wann die Basisstations-Entität (111) wahrscheinlich aufhört, den aktuell abgedeckten Bereich zu bedienen, wobei die Dienstzeit-Information ein allgemein anwendbares Dienstzeit-Intervall anzeigt und eine Dienstzeit für alle Endgeräte innerhalb der erdbewegten Funkzelle gleich ist.

2. Verfahren nach Anspruch 1, wobei die Referenzstandort-Information einen zentralen Teil (116) der erdbewegten Funkzelle (11) definiert, insbesondere eine zentrale Trajektorienbahn der erdbewegten Funkzelle (11), wobei insbesondere die Referenzstandort-Information auch eine seitliche Erweiterung der erdbewegten Funkzelle (11) vom zentralen Teil (116) der erdbewegten Funkzelle (11) anzeigt, insbesondere von der zentralen Trajektorienbahn der erdbewegten Funkzelle (11).

3. Verfahren nach Anspruch 1, wobei die Referenzstandort-Information zwei seitliche Grenzteile der erdbewegten Funkzelle (11) in einer Richtung definiert, die im Wesentlichen parallel zur Bewegungsrichtung (115) der Antennen-Entität oder Antennenfunktionalität (111') ist und/oder wobei die Referenzstandort-Information mindestens eine Referenzpunkt-Information, mindestens eine Höheninformation und/oder mindestens eine Breiteninformation umfasst, vorzugsweise eine erste Höheninformation, eine zweite Höheninformation, eine erste Breiteninformation und eine zweite Breiteninformation, wobei die mindestens eine Höheninformation vorzugsweise einer Erweiterung des Abdeckungsbereichs vom mindestens einen Referenzpunkt aus in einer Richtung entspricht, die im Wesentlichen parallel zur Bewegungsrichtung (115) der Antennen-Entität oder Antennenfunktionalität (111') ist, und wobei die Breiteninformation vorzugsweise der Erweiterung des Abdeckungsbereichs vom mindestens einen Referenzpunkt aus in einer zur Bewegungsrichtung (115) der Antennen-Entität oder Antennenfunktionalität (111') orthogonalen Richtung entspricht.

4. Verfahren nach einem der vorhergehenden Ansprüche, wobei das Übertragen der Referenzstandort-Information und der Dienstzeit-Information von der Basisstations-Entität (111) an das Endgerät (20) das Übertragen der Referenzstandort-Information und der Dienstzeit-Information als Informationselemente als Teil eines Systeminformationsblocks umfasst, insbesondere als Rundsendung von der Basisstations-Entität (111), insbesondere Systeminformationsblock 19 mit 3GPP NR-Technologie.

5. Basisstations-Entität (111) zum Übertragen einer Dienstzeit-Information an ein Endgerät (20) in einem Mobilkommunikationsnetz (100), wobei das Mobilkommunikationsnetz (100) ein nicht-terrestrisches Netz ist oder zumindest umfasst, wobei die Basisstations-Entität (111) konfiguriert ist, Teil dieses nicht-terrestrischen Netzes zu sein und das Endgerät (20) zu bedienen, wobei die Basisstations-Entität (111) eine Antennen-Entität oder Antennenfunktionalität (111') aufweist, die entweder eine satellitenbasierte Antennen-Entität oder -Funktionalität ist, oder eine Antennen-Entität oder - Funktionalität, die auf einer Hochaltitude-Plattform basiert, wobei die Antennen-Entität oder Antennenfunktionalität (111') konfiguriert ist, sich relativ zur Erdoberfläche entlang einer Bewegungsrichtung (115) zu bewegen und dadurch Funkabdeckung für einen sich bewegenden Bereich bereitzustellen, der einer erdbewegten Funkzelle (11) entspricht, wobei die Antennen-Entität oder Antennenfunktionalität (111') konfiguriert ist, einen Abdeckungsbereich bereitzustellen, sodass ein rechteckig geformter Abdeckungsbereich erzeugt wird, wobei zwei Seiten des rechteckig geformten Abdeckungsbereichs im Wesentlichen parallel zur Bewegungsrichtung (115) des Abdeckungsbereichs oder im Wesentlichen parallel zu einer zentralen Trajektorienbahn der erdbewegten Funkzelle (11) sind, und wobei eines der Folgenden realisiert wird:
-- die Antennen-Entität oder Antennenfunktionalität (111') ist konfiguriert, mindestens einen beweglichen Strahl zu erzeugen, wobei der bewegliche Strahl zu verschiedenen Zeitpunkten in verschiedene räumliche Richtungen orientiert wird, sodass der Abdeckungsbereich während eines vorbestimmten Zeitintervalls durchstrichen wird und sodass der resultierende Abdeckungsbereich ungefähr dem rechteckig geformten erdbewegten Abdeckungsbereich der Funkzelle (11) entspricht, oder
-- die Antennen-Entität oder Antennenfunktionalität (111') ist konfiguriert, eine Vielzahl von unterschiedlich geformten statischen oder quasi-statischen Strahlen zu erzeugen, sodass ein resultierender Abdeckungsbereich ungefähr dem rechteckig geformten erdbewegten Abdeckungsbereich der Funkzelle (11) entspricht, und
wobei die Basisstations-Entität (111) ferner konfiguriert ist, eine Referenzstandort-Information und die Dienstzeit-Information an das Endgerät (20) zu übertragen, wobei sich die Referenzstandort-Information auf einen spezifischen Teil eines aktuell abgedeckten Bereichs bezieht und sich die Dienstzeit-Information darauf bezieht, bis wann die Basisstations-Entität (111) wahrscheinlich aufhört, den aktuell abgedeckten Bereich zu bedienen, wobei die Dienstzeit-Information ein allgemein anwendbares Dienstzeit-Intervall anzeigt und eine Dienstzeit für alle Endgeräte innerhalb der erdbewegten Funkzelle gleich ist.

6. System umfassend eine Basisstations-Entität (111) nach Anspruch 5.

7. Computerlesbares Medium umfassend Anweisungen, die, wenn sie auf einem Computer ausgeführt werden, den Computer veranlassen, ein Verfahren nach einem der Ansprüche 1 bis 4 auszuführen.

## Revendications

1. Procédé de transmission d'une information de temps de service à un équipement utilisateur (20) dans un réseau de communication mobile (100), le réseau de communication mobile (100) étant ou comprenant au moins un réseau non-terrestre, dans lequel l'équipement utilisateur (20) est desservi par une entité de station de base (111) faisant partie de ce réseau non-terrestre, dans lequel l'entité de station de base (111) a une entité d'antenne ou fonctionnalité d'antenne (111') étant soit une entité d'antenne ou fonctionnalité basée sur satellite, soit une entité d'antenne ou fonctionnalité basée sur une plateforme à haute altitude, l'entité d'antenne ou fonctionnalité d'antenne (111') se déplaçant par rapport à la surface terrestre selon une direction de mouvement (115), fournissant ainsi une couverture radio à une zone mobile correspondant à une cellule radio mobile terrestre (11), dans lequel le procédé comprend :
-- la fourniture, par l'entité d'antenne ou fonctionnalité d'antenne (111'), d'une zone de couverture de sorte qu'une zone de couverture de forme rectangulaire mobile terrestre soit générée, dans laquelle deux côtés de la zone de couverture de forme rectangulaire mobile terrestre sont essentiellement parallèles à une direction de mouvement (115) de la cellule radio mobile terrestre (11) ou essentiellement parallèles à une trajectoire centrale de la cellule radio mobile terrestre (11) et dans laquelle l'une des réalisations suivantes est effectuée :
-- la génération, par l'entité d'antenne ou fonctionnalité d'antenne (111'), d'au moins un faisceau mobile, dans laquelle le faisceau mobile est orienté dans différentes directions spatiales à différents moments de sorte que la zone de couverture soit balayée pendant un intervalle de temps prédéterminé et de sorte qu'une zone de couverture résultante corresponde approximativement à la zone de couverture mobile terrestre de forme rectangulaire de la cellule radio (11), ou
**--** la génération, par l'entité d'antenne ou fonctionnalité d'antenne (111'), d'une multitude de faisceaux statiques ou quasi-statiques de formes différentes de sorte qu'une zone de couverture résultante corresponde approximativement à la zone de couverture mobile terrestre de forme rectangulaire de la cellule radio (11), et dans lequel le procédé comprend en outre :
-- la transmission, par l'entité de station de base (111) à l'équipement utilisateur (20), d'une information de localisation de référence et de l'information de temps de service, l'information de localisation de référence se rapportant à une partie spécifique d'une zone actuellement couverte, et l'information de temps de service se rapportant au moment où l'entité de station de base (111) cessera probablement de desservir la zone actuellement couverte, dans laquelle l'information de temps de service indique un intervalle de temps de service généralement applicable et un temps de service est égal pour tous les équipements utilisateur dans la cellule radio mobile terrestre.

2. Procédé selon la revendication 1, dans lequel l'information de localisation de référence définit une partie centrale (116) de la cellule radio mobile terrestre (11), en particulier une trajectoire centrale de la cellule radio mobile terrestre (11), dans lequel en particulier l'information de localisation de référence indique aussi une extension latérale de la cellule radio mobile terrestre (11) à partir de la partie centrale (116) de la cellule radio mobile terrestre (11), en particulier la trajectoire centrale de la cellule radio mobile terrestre (11).

3. Procédé selon la revendication 1, dans lequel l'information de localisation de référence définit deux parties de bordure latérale de la cellule radio mobile terrestre (11) dans une direction essentiellement parallèle à la direction de mouvement (115) de l'entité d'antenne ou fonctionnalité d'antenne (111') et/ou dans lequel l'information de localisation de référence comprend au moins une information de point de référence, au moins une information de hauteur et/ou au moins une information de largeur, de préférence une première information de hauteur, une seconde information de hauteur, une première information de largeur et une seconde information de largeur, dans laquelle l'au moins une information de hauteur correspond de préférence à une extension de la zone de couverture, à partir de l'au moins un point de référence, dans une direction essentiellement parallèle à la direction de mouvement (115) de l'entité d'antenne ou fonctionnalité d'antenne (111'), et dans laquelle l'information de largeur correspond de préférence à l'extension de la zone de couverture, à partir de l'au moins un point de référence, dans une direction essentiellement orthogonale à la direction de mouvement (115) de l'entité d'antenne ou fonctionnalité d'antenne (111').

4. Procédé selon l'une des revendications précédentes, dans lequel la transmission, par l'entité de station de base (111) à l'équipement utilisateur (20) de l'information de localisation de référence et de l'information de temps de service comprend la transmission, par l'entité de station de base (111) à l'équipement utilisateur (20), de l'information de localisation de référence et de l'information de temps de service comme éléments d'information faisant partie d'un bloc d'information système, en particulier diffusé par l'entité de station de base (111), en particulier bloc d'information système 19 avec la technologie 3GPP NR.

5. Entité de station de base (111) pour transmettre une information de temps de service à un équipement utilisateur (20) dans un réseau de communication mobile (100), le réseau de communication mobile (100) étant ou comprenant au moins un réseau non-terrestre, dans laquelle l'entité de station de base (111) est configurée pour faire partie de ce réseau non-terrestre et pour desservir l'équipement utilisateur (20), dans laquelle l'entité de station de base (111) a une entité d'antenne ou fonctionnalité d'antenne (111') étant soit une entité d'antenne ou fonctionnalité basée sur satellite, soit une entité d'antenne ou fonctionnalité basée sur une plateforme à haute altitude, l'entité d'antenne ou fonctionnalité d'antenne (111') étant configurée pour se déplacer par rapport à la surface terrestre selon une direction de mouvement (115), fournissant ainsi une couverture radio à une zone mobile correspondant à une cellule radio mobile terrestre (11), dans laquelle l'entité d'antenne ou fonctionnalité d'antenne (111') est configurée pour fournir une zone de couverture de sorte qu'une zone de couverture de forme rectangulaire mobile terrestre soit générée, dans laquelle deux côtés de la zone de couverture de forme rectangulaire mobile terrestre sont essentiellement parallèles à une direction de mouvement (115) de la zone de couverture mobile terrestre ou essentiellement parallèles à une trajectoire centrale de la cellule radio mobile terrestre (11), et dans laquelle l'une des réalisations suivantes est effectuée :
-- l'entité d'antenne ou fonctionnalité d'antenne (111') est configurée pour générer au moins un faisceau mobile, dans laquelle le faisceau mobile est orienté dans différentes directions spatiales à différents moments de sorte que la zone de couverture soit balayée pendant un intervalle de temps prédéterminé et de sorte que la zone de couverture résultante corresponde approximativement à la zone de couverture de forme rectangulaire de la cellule radio mobile terrestre (11), ou
**--** l'entité d'antenne ou fonctionnalité d'antenne (111') est configurée pour générer une multitude de faisceaux statiques ou quasi-statiques de formes différentes de sorte qu'une zone de couverture résultante corresponde approximativement à la zone de couverture mobile terrestre de forme rectangulaire de la cellule radio (11), et dans laquelle l'entité de station de base (111) est en outre configurée pour transmettre une information de localisation de référence et l'information de temps de service à l'équipement utilisateur (20), l'information de localisation de référence se rapportant à une partie spécifique d'une zone actuellement couverte, et l'information de temps de service se rapportant au moment où l'entité de station de base (111) cessera probablement de desservir la zone actuellement couverte, dans laquelle l'information de temps de service indique un intervalle de temps de service généralement applicable et un temps de service est égal pour tous les équipements utilisateur dans la cellule radio mobile terrestre.

6. Système comprenant une entité de station de base (111) selon la revendication 5.

7. Support lisible par ordinateur comprenant des instructions qui, lorsqu'elles sont exécutées sur un ordinateur, amènent l'ordinateur à exécuter un procédé selon l'une des revendications 1 à 4.
